# EUROPÄISCHE PATENTSCHRIFT

(11) **EP 4 088 952 B1**
(45) Veröffentlichungstag und Bekanntmachung des Hinweises auf die Patenterteilung: **14.02.2024**
(21) Anmeldenummer: 21212199.0
(22) Anmeldetag: 03.12.2021
(51) Int. Cl.: B60C 23/04

(54) **VERFAHREN ZUR ÜBERWACHUNG VON REIFENEIGENSCHAFTEN**
METHOD FOR MONITORING TYRE PROPERTIES
PROCÉDÉ DE SURVEILLANCE DES PROPRIÉTÉS DE PNEU

(30) Priorität: 12.05.2021 DE 102021204887
(43) Veröffentlichungstag der Anmeldung: 16.11.2022
(73) Patentinhaber: Continental Reifen Deutschland GmbH, 30165 Hannover (DE)
(72) Erfinder: Cyllik, Adrian, 30165 Hannover (DE); Abeling, Stefan, 30165 Hannover (DE); Surisetti, Siva Sankar, 30165 Hannover (DE)
(74) Vertreter: Continental Corporation

(56) Entgegenhaltungen:
- WO-A1-2011/004229
- DE-B3-102007 007 136

## Beschreibung

Die Erfindung betrifft ein Verfahren zur Überwachung von Reifeneigenschaften. Zur Überwachung von Reifenzuständen, insbesondere einem Reifendruck, von Reifen eines Nutzfahrzeuges sind Reifen-Sensor-Module bzw. Reifenmodule bekannt, die beispielsweise im Inneren eines Reifens angeordnet sind. Derartige Reifen-Sensor-Module sind ausgebildet, positionsgebunden einen Reifendruck zu erfassen, zu verarbeiten und an ein elektronisches Steuergerät (ECU) eines Überwachungssystems zu übertragen. Das Steuergerät nimmt das Datentelegramm über ein Empfangsmodul des Überwachungssystems auf und gibt in Abhängigkeit von Grenzwerten ein Warnsignal an den Fahrer aus, beispielsweise wenn an einem der Reifen ein Reifendruck unterhalb eines Grenzwertes festgestellt wurde. Ein Beispiel für ein solches Reifen-Sensor-Modul offenbart die DE 102 43 441 A1.

Die WO 2011 /004229 A1 und DE 10 2007 007 136 B3 offenbaren weitere bekannte Reifendruckkontrollsysteme.

Es sind eine Vielzahl von Reifendruckkontrollsystemen bekannt, mit denen Druckverluste erkannt werden können.

Es kann vorkommen, dass ein Nutzfahrzeug mit Reifen ausgestattet wird, die einzelne Reifenmodule aufweisen, wobei das Nutzfahrzeug keine eigenständige Sende- und Empfangseinheit für die Auswertung der Daten für die Reifenmodule aufweist.

In diesem Fall muss sichergestellt werden, dass die Reifenmodule ihre Daten zu einer stationären Anfangsvorrichtung außerhalb des Fahrzeuges senden können. Der Erfindung liegt die Aufgabe zugrunde, ein Verfahren bereitzustellen, mit dem Reifendruckkontrollsysteme verbessert werden.

Gelöst wird die Aufgabe durch ein Verfahren mit den folgenden Schritten:
a) Bereitstellen von Fahrzeugreifen mit einer Vielzahl von Reifenmodulen an einem Fahrzeug,
   wobei die Reifenmodule jeweils zumindestens einen Sensor für die Messung von Reifeneigenschaften aufweisen,
b) Starten und Bewegen des Fahrzeuges,
   wobei die Reifenmodule von einem Stillstand-Modus in einen Bewegungsmodus wechseln,
c) Anhalten des Fahrzeuges,
   wobei mindestens ein Sensor im Reifenmodul den Stillstand oder eine langsame Bewegung des Fahrzeugreifens detektiert und dann in einen Empfangsmodus für eine stationäre Empfangsvorrichtung wechselt,
   wobei in diesem Modus die Sendehäufigkeit der Reifenmodule gegenüber der Sendehäufigkeit im Stillstandmodus oder einem Fahrtmodus erhöht wird,
   um die erforderliche Standzeit des Fahrzeuges neben der stationären Empfangsvorrichtung zum Empfangen der Reifeneigenschaften von den Reifenmodulen zu reduzieren,
d) Übergang in einen Interim-Modus, wenn eine vorgegeben Zeitdauer überschritten wird oder Übergang in den Bewegungsmodus.

Ein Vorteil des Verfahrens besteht darin, dass mit dem Einsatz des neuen Verfahrens herkömmliche Reifendruckkontrollsysteme wesentlich verbessert werden.

Für die Situation, dass das Fahrzeug, insbesondere ein Nutzfahrzeug mit einem Nutzfahrzeuganhänger, keine eigene Sende- und Empfangseinheit aufweist, wird eine regelmäßige Überwachung der Fahrzeugreifen an einer Basisstation mit einer Empfangseinheit bzw. stationären Empfangsvorrichtung durchgeführt.

Immer wenn das Fahrzeug mit den Fahrzeugreifen, die Reifenmodule aufweisen, an der Basisstation vorbeifährt oder im Bereich der Basisstation parkt, können die jeweiligen Daten der Reifenmodule des Fahrzeugreifens durch die Empfangsvorrichtung empfangen werden.

Mit dem neuen Verfahren wird sichergestellt, dass das Fahrzeug nicht zu lange neben der Empfangsvorrichtung stehen bleiben muss, um die Daten der jeweiligen Reifenmodule zu erfassen. Im Empfangsmodus für die stationäre Empfangsvorrichtung sendet das Reifenmodul mit einer höheren Sendehäufigkeit als das im Fahrtmodus der Fall ist. Dadurch ist es ausreichend, dass das Fahrzeug nur kurzzeitig neben der Empfangsvorrichtung stehen bleibt, damit alle Daten von den Reifenmodulen übertragen werden können.

In einer vorteilhaften Weiterbildung der Erfindung ist vorgesehen, dass die Sendehäufigkeit im Empfangsmodus für eine stationäre Empfangsvorrichtung zwischen 2 und 32 Sekunden, vorzugsweise bei ca. 16 Sekunden liegt.

Diese Sendehäufigkeit ist deutlich kürzer, als die Sendehäufigkeit im Fahrtmodus oder im Stillstandmodus, die bei ca. 128 Sekunden liegen kann. Bei dieser Sendehäufigkeit wird gewährleistet, dass das Fahrzeug nur kurzzeitig neben der Empfangsvorrichtung stehen bleiben muss.

In einer weiteren vorteilhaften Weiterbildung der Erfindung ist vorgesehen, dass die Zeitdauer des Empfangsmodus für die stationäre Empfangsvorrichtung manuell über eine Software eingestellt werden kann.

Dadurch kann der Nutzer oder der Flottenbetreiber die Zeitdauer für die Aktivierung des Empfangsmodus individuell einstellen und an die jeweiligen individuellen Bedürfnisse anpassen.

In einer weiteren vorteilhaften Weiterbildung der Erfindung ist vorgesehen, dass die Zeitdauer des Empfangsmodus für die stationäre Empfangsvorrichtung als Voreinstellung ca. 4 Minuten beträgt.

Bei dieser Voreinstellung ist es im Normalfall ausreichend, wenn das Fahrzeug kurzzeitig neben der Empfangsvorrichtung stehen bleibt, damit alle Daten sicher übertragen werden können.

In einer weiteren vorteilhaften Weiterbildung der Erfindung ist vorgesehen, dass die Zeitdauer des Empfangsmodus für die stationäre Empfangsvorrichtung manuell auf den Wert von 0 Minuten gesetzt werden kann.

Diese Einstellung ist insbesondere vorteilhaft, wenn der Flottenbetreiber keine Empfangsvorrichtungen für die Fahrzeuge bereitstellen kann.

In einer weiteren vorteilhaften Weiterbildung der Erfindung ist vorgesehen, dass die Zeitdauer des Empfangsmodus für die stationäre Empfangsvorrichtung manuell auf den Wert von ca. 2 Minuten gesetzt werden kann.

Dieser Wert für die Zeiteinstellung ist dann vorteilhaft, wenn die Empfangsvorrichtung z. B. direkt am Eingangstor des Flottenbetreibers stationiert ist.

In einer weiteren vorteilhaften Weiterbildung der Erfindung ist vorgesehen, dass die Zeitdauer des Empfangsmodus für die stationäre Empfangsvorrichtung manuell auf den Wert von ca. 8 Minuten gesetzt werden kann.

Diese Einstellung kann vorteilhaft sein, wenn sich die Empfangsvorrichtung im hinteren Bereich des Betriebshofes befindet. In diesem Fall wird das Fahrzeug mit einer verminderten Geschwindigkeit nach einer bestimmten Zeit in der Regel die Empfangsvorrichtung erreichen.

In einer weiteren vorteilhaften Weiterbildung der Erfindung ist vorgesehen, dass Daten von den Reifenmodulen über eine Hochfrequenz und/oder Bluetooth-Kommunikation übertragen werden.

Beide Übertragungswege besitzen spezielle Vorteile.

In einer weiteren vorteilhaften Weiterbildung der Erfindung ist vorgesehen, dass die Reifenmodule jeweils 2 µ-Controller aufweisen, wobei der erste µ-Controller für das Senden von Hochfrequenz-Telegrammen und der zweite µ-Controller für die Bluetooth-Kommunikation eingesetzt wird.

Dadurch können die unterschiedlichen Funktionen getrennt voneinander gesteuert und geregelt werden.

In einer weiteren vorteilhaften Weiterbildung der Erfindung ist vorgesehen, dass die Bluetooth-Kommunikation der Reifenmodule deaktiviert wird, wenn sich die Reifenmodule im Bewegungsmodus befinden.

Dadurch wird die Batterielebensdauer für das Reifenmodul wesentlich verlängert.

Anhand eines Ausführungsbeispiels soll die Erfindung näher erläutert werden. Es zeigt:
- Fig. 1:: ein Zugfahrzeug mit einem NFZ-Anhänger
- Fig. 2:: einen Wechsel zwischen den einzelnen Betriebsmodi für das Reifenmodul.

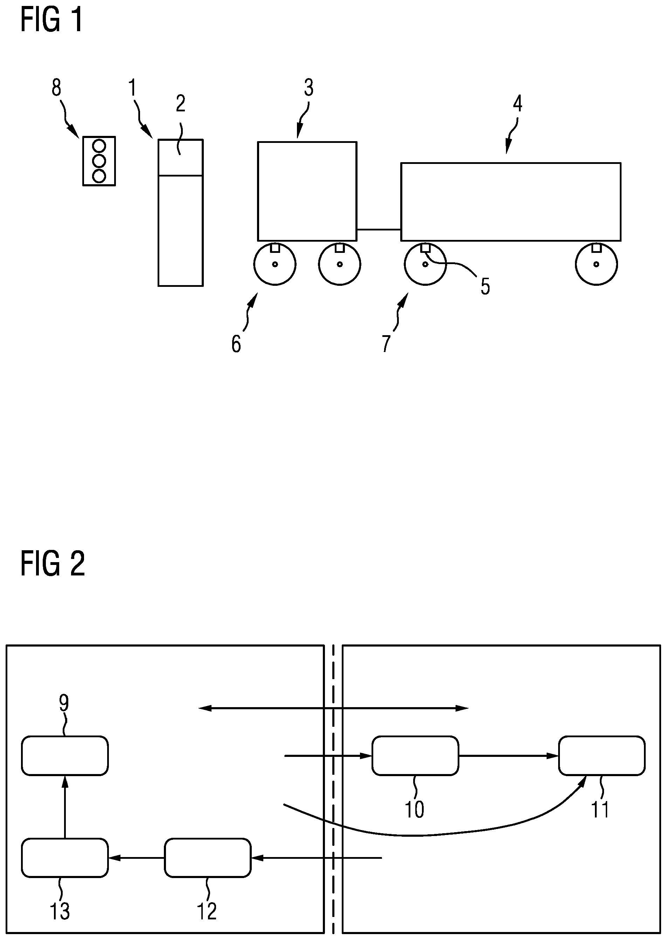

Die Fig. 1 zeigt ein Ausführungsbeispiel.

Es ist schematisch eine Nutzfahrzeugzugmaschine und ein Nutzfahrzeuganhänger dargestellt. Die Nutzfahrzeugzugmaschine 3 und der Nutzfahrzeuganhänger 4 weisen jeweils eine Vielzahl von Fahrzeugreifen 6 und 7 auf, die mit Reifenmodulen ausgestattet sind. Die Reifenmodule 5 sind auf der Reifeninnenseite angeordnet und können mit entsprechenden Sensoren den Reifendruck und die Reifentemperatur messen.

Weder die Zugmaschine 3 noch der Anhänger 4 besitzen bei diesem Ausführungsbeispiel eine eigene Empfangseinheit, um die Signale von den Reifenmodulen empfangen zu können. Das dargestellte Nutzfahrzeug ist beispielsweise ein Nutzfahrzeug eines Flottenbetreibers. Das Fahrzeug fährt in regelmäßigen Abständen an der Basisstation bzw. stationären Empfangsvorrichtung 1 des Flottenbetreibers vorbei.

Die Basisstation 1 könnte beispielsweise am Einfahrtstor des Flottenbetreibers installiert sein. Die Basisstation 1 besitzt eine Empfangseinheit 2, mit der insbesondere die Signale von den Reifenmodulen 5 automatisiert empfangen werden können.

Sobald das Fahrzeug in der Nähe der Basisstation 1 und der Empfangseinheit 2 anhält, empfängt die Empfangseinheit 2 die Identifikations-Codes von den einzelnen Reifenmodulen 5.

Die Fig. 2 zeigt ein Ausführungsbeispiel für den Wechsel zwischen unterschiedlichen Betriebsmodi.

Der Stillstandmodus für ein Reifenmodul umfasst den Parkmodus 9 und den Interim-Modus 13 auf der linken Seite der Figur.

Der Bewegungsmodus für ein Reifenmodul umfasst den Ersten Block-Modus 10 und den Fahrt-Modus 11 auf der rechten Seite der Figur.

Über einen Beschleunigungssensor im Reifenmodul wird die Radialbeschleunigung, die auf das Reifenmodul wirkt, ermittelt.

Erst bei einer Radialbeschleunigung von ca. 5 g, was einer Fahrzeuggeschwindigkeit von ca. 20 km/h entspricht, wechselt das Reifenmodul in einen Ersten Block-Modus 10 oder den Fahrt-Modus 11.

Zunächst befindet sich das Fahrzeug im Parkmodus 9. Der Fahrer startet das Fahrzeug und fährt los. Sensoren der Reifenmodule detektieren die Bewegung Reifens und somit des Fahrzeuges. Die Reifenmodule wechseln in den Ersten Block-Modus 10, wobei die Sendehäufigkeit für die Reifenmodule beim Ersten Block-Modus 10 bei ca. 16 Sekunden liegt. Wenn ein Reifenmodul eine definierte Anzahl von Funktelegrammen (Datentelegrammen) versenden hat (z.B. 40), wechselt das Reifenmodul in den Fahrtmodus 11. Im Fahrtmodus 11 liegt die Sendehäufigkeit bei einer reduzierten Sendehäufigkeit von ca. 128 Sekunden. Der Vorteil ist, dass zu Beginn einer Fahrt (nach einer längeren Pause) schnell Daten zur Verfügung stehen (ca. alle 16s), dann aber die Sendehäufigkeit abnimmt, was Energie spart. Wenn ein Reifenmodul im Fahrtmodus 11 ist, das Fahrzeug dann kurz stehen bleibt (z.B. an einer Ampel) und dann wieder anfährt, kehrt das Reifenmodul in den Fahrmodus 11 zurück und nicht in den Ersten Block-Modus 10. Nachdem mit den Sensoren ein Stillstand des Fahrzeuges detektiert wurde, wechseln die Reifenmodule in den Empfangsmodus 12 für eine stationäre Empfangsvorrichtung. In diesem Modus 12 ist die Sendehäufigkeit wesentlich höher als die Sendehäufigkeit im Interim-Modus 13. Dadurch wird die erforderliche Haltezeit neben der Empfangsvorrichtung wesentlich reduziert. Nach dem Empfangsmodus 12 wechselt das Reifenmodul in den Interim-Modus 13. Bei diesem Modus liegt die Sendehäufigkeit bei ca. 128 Sekunden. Die Sendehäufigkeit ist geringer, als im Empfangsmodus 12. Wenn der Stillstand des Fahrzeuges länger als 15 Minuten vorliegt, wechseln die Reifenmodule wieder zurück in den Parkmodus 9. Im Parkmodus beträgt die Sendehäufigkeit ebenfalls ca. 128 Sekunden. Im Normalfall hat der Fahrer das Fahrzeug in diesem Fall geparkt und ggf. ausgeschaltet.

Die Reifenmodule, nachfolgend auch mit der Bezeichnung TTM abgekürzt, haben unterschiedliche Betriebsmodi, die in der Fig. 2 dargestellt sind:
- MP: Mode Park (TTM ist im Stillstand - Parkmodus)
- MFB: ModeFirstBlock bzw. Erster Block-Modus: TTM ist in Bewegung (Beginn einer Fahrt)
- MD: Mode Drive bzw. Fahrtmodus (TTM ist in Bewegung)
- MYR: Mode Yard Reader bzw. Empfangs-Modus für eine stationäre Empfangsvorrichtung: Wenn das TTM zum Stillstand kommt, verweilt das TTM in MYR, bevor es in MI wechselt
- MI: Mode Interim bzw. Interim-Modus: Wenn der MYR beendet ist, wechselt das TTM in MI, verweilt in diesem Modus, bis es aufgrund von Bewegung in den Fahrtmodus (MFB oder MD) oder bei weiterem Stillstand in MP wechselt. Die Sendehäufigkeit des TTM im MYR ist höher als im MI (16s statt 128s).

Der MYR wird eingeführt, um die Verweildauer an einem stationären Empfänger bzw. stationäre Empfangsvorrichtung (YRS = Yard Reader Station) zu verkürzen. Die YRS wird verwendet, wenn an einem Fahrzeug nur TTMs verwendet werden und keine Empfangseinheit. In diesem Fall können dann die Sensordaten von der YRS ausgelesen werden. Die YRS kann z.B. an Tankstellen oder Betriebshöfen installiert sein. Das Fahrzeug soll kurzzeitig neben der YRS stehen bleiben, bis die Daten aller TTMs übertragen wurden. Das TTM sendet nur in festen zeitlichen Abständen sein Hochfrequenz(HF)-Telegramm und kann z.B. nicht vom YRS aktiv nach seinen Daten abgefragt werden. Deshalb muss das Fahrzeug eine definierte Zeit neben der YRS stehen bleiben.

Die Sendehäufigkeit des TTM hat einen signifikanten Einfluss auf seine Lebensdauer bzw. auf die Lebensdauer der Batterie. Als optimale Einstellung in Bezug auf Datenverfügbarkeit am Empfänger und TTM-Lebensdauer ergibt sich eine Senderate von 128 Sekunden. Im MI sendet das TTM alle 128 Sekunden seine Daten. Sobald der MYR aktiviert ist, sendet das TTM alle 16 Sekunden seine Daten. Damit ist eine deutlich kürzere Verweildauer des Fahrzeuges an der YRS möglich. Das TTM wechselt in den MYR, wenn das Fahrzeug aus der Bewegung kommend (MFB oder MD) stehen bleibt oder sich sehr langsam bewegt (z.B. < 10km/h).

Neben den periodischen HF-Funktelegrammen (433 MHz) sendet das TTM auch periodisch Bluetooth Telegramme (auf 2,4 GHz, im Folgenden mit BT bezeichnet). Diese periodischen BT-Telegramme sind sogenannte Advertising Frames. Diese Frames sind gemäß dem BT-Core Standard nicht an einen bestimmten Empfänger adressiert, und können von jedem BT-Gerät empfangen werden. Sie sind z.B. notwendig, um eine Verbindung zwischen dem BT-Gerät und dem TTM zu etablieren, und so einen Punkt zu Punkt Kommunikationskanal aufzubauen (Connected Mode).

Um Energie zu sparen, sind diese Advertising Frames so kurz wie möglich. Man kann jedoch auch zusätzliche Daten, wie Druck, Temperatur, Batteriestatus des TTMs, etc. in den Advertising Frames übertragen. Der Vorteil ist, dass der Nutzer die Daten verfügbar hat, ohne sich mit dem TTM verbinden zu müssen, und die Einrichtung einer Verbindung und deren Aufrechthaltung zudem sehr energieintensiv ist.

Der Nachteil ist, dass der Energiebedarf hierfür größer ist, und dass die Daten im größten Teil der Sendezeit nicht verarbeitet werden, da sich kein Empfänger in der Nähe befindet.

Das Versenden von Telegrammen, gleich ob über 433 MHz oder über 2,4 GHz (BT) kostet Energie und ist im Vergleich zu normalen Rechenoperationen energieintensiver.

Je häufiger man sendet (z.B. statt jede 128s, in manchen Modi alle 16s), desto größer der Energiebedarf.

Beim TTM wird ein erster µ-Controller für die Sensor-Messungen und das Senden der HF-Telegramme genutzt (HF: Hochfrequenz). Ein zweiter µ-Controller des TTM wird für die BT-Kommunikation eingesetzt.

Das Betreiben von 2 µ-Controllern benötigt mehr Energie als das Betreiben von nur einem µ-Controller.

Um bei einer YRS die Verweilzeit zu verkürzen, wird der MYR eingeführt.

Bei Reifenmodulen, die den MYR nicht haben, würden alle 128s ein HF-Telegramm gesendet, wenn das Fahrzeug, stehen bleibt oder langsamer fährt (< 10 km/h). Es wechselt gleich in den Mode MI. Beim den neuen Reifenmodulen bzw. TTMs wechseln diese bei einem Stillstand oder bei einer langsamen Bewegung zunächst in den MYR.

Im MYR sendet das TTM alle 16 Sekunden. Die Standarddauer für die Aktivierund des MYR sind 4 Minuten.

Das TTM wechselt bei jedem Stopp in den MYR, unabhängig davon, ob es neben einer YRS steht oder nicht. Es wechselt also bei jedem Anhalten, insb. an der Ampel oder bei einem Stau. Dies führt zu einem erhöhten Energieverbrauch.

Die BT-Schnittstelle wurde gemäß dem BT-Core Standard implementiert, damit es mit jedem BT-fähigen Gerät kommunizieren kann. Das TTM sendet Advertising Frames, um sich für andere BT-Geräten erkennbar zu geben. Der Nutzer kann sich über ein anderes BT-Endgerät mit dem TTM über BT verbinden, um Inhalte aus dem TTM zu lesen, oder um Inhalte auf das TTM zu schreiben. Diese Bi-Direktionale Schnittstelle ist wesentlich performanter und leistungsstärker als eine konventionelle HF-Schnittstelle und bietet viele Optionen für zukünftige Anwendungen.

Der BT-chip kann die komplette Zeit aktiv sein und auch Advertising Frames versenden. Dies verbraucht jedoch relativ viel Energie. Der BT-chip und damit auch die BT-Kommunikation wird bei einem sich bewegendem TTM deaktiviert, um Energie zu sparen.

Da das Aktivieren (Hochfahren) des BT-chips Energie kostet, wird der BT-Chip erst zum Übergang vom MYR in MI aktiviert. Damit wird sichergestellt, dass der BT-Chip nicht unnötiger Weise bei jedem kurzen Stopp, z.B. an der Ampel (8), aktiviert wird.

Die Dauer des MYR ist für den Kunden einstellbar. Einstellmöglichkeiten sind 0 min, 2 min, 4 min oder 8 min. Prinzipiell ist aber jede Zeitdauer für den MYR möglich. Bei einer Einstellung von 0 min bedeutet das, dass der MYR deaktiviert ist und dass TTM dann bei jedem Anhalten sofort in den MI wechselt.

Die Sendehäufigkeit im MYR ist über eine Software einstellbar.

### 0 Minuten-Einstellung:

Dies ist für Kunden gedacht, die keine YRS haben. Damit wird Energie gespart, da das TTM bei jedem Stillstand nur jede 128s und nicht jede 16s HF-Telegramme sendet. Ist Bluetooth aktiviert, wird diese Energieersparnis gemindert, da dann der BT-Chip und die BT-Kommunikation eingeschaltet wird, das zusätzlichen Energiebedarf zur Folge hat.

### 2 Minuten-Einstellung:

Dies ist für Kunden gedacht, die eine YRS haben, welche so positioniert ist, dass sie vom Fahrzeug direkt angefahren werden kann, z.B. an der Einfahrt zum Betriebsgelände oder an einer Tankstelle. Hier reicht es aus, wenn der MYR nur 2 min andauert.

Je nach Energiebedarf für das Aktivieren des BT-chips, kann es aus Sicht der Energiebilanz besser sein, den MYR auf 2 min einzustellen, anstatt ganz auszuschalten.

### 4 und 8 Minuten-Einstellung:

Dies ist für Kunden gedacht, die eine YRS haben, diese auf dem Betriebsgelände jedoch nicht direkt angefahren werden kann. Das Fahrzeug muss für eine gewisse Zeit im Schritttempo (<10km/h) sich auf die YRS zubewegen. Wenn das Fahrzeug dann die YRS erreicht hat, sendet das TTM immer noch jede 16s die HF-Telegramme und das Fahrzeug muss nur kurz neben der YRS verweilen. Je länger der MYR dauert, desto mehr Energie wird verbraucht.

Der Inhalt der BT Advertising Frames ist einstellbar.

### Keine Daten:

Das Advertising Frame wird nur zum Aufbau der BT-Verbindung genutzt. Dies ist die Energie sparsamste Variante. Zum einen, weil die Advertising Frames sehr kurz sind. Zum anderen, weil keine Messwerte zwischen den beiden µ-Kontrollern im TTM kommuniziert werden müssen.

Der erste µ-Controller - zuständig für das Senden der HF-Telegramme - steuert und prozessiert auch die Messungen des Druck-, Temperatur- und Beschleunigungssensors. Der zweite µ-Controller steuert hingegen die BT-Kommunikation.

Dafür muss sich der Nutzer immer mit einem TTM über BT verbinden, um die für ihn interessanten Daten auszulesen. Dies erfordert mehr Zeit.

### Nur Sensor-Daten-Übertragung:

In den Advertising Frame werden z.B. nur Druck und Temperatur übertragen. Dies erfordert mehr Energie, da das Advertising Frame um die Sensor-Daten länger ist. Dafür ist keine spezielle Interaktion des Nutzers mit dem TTM notwendig, um die TPMS-Daten zu erhalten. Er muss mit seinem BT-Endgerät nur empfangen und hat mit dem Empfang der Advertising Frames die Sensor-Daten automatisch verfügbar.

### Alle TTM relevanten Daten:

In dem Advertising Frame werden alle TTM relevanten Daten übertragen, nicht nur z.B. nur Druck und Temperatur, sondern auch z.B. die Laufleistung des TTMs, der Batteriestatus und andere Daten. Dies erfordert am meisten Energie, da das Advertising Frame um diese TTM-Daten länger ist.

Dafür ist jedoch keine spezielle Interaktion des Nutzers mit dem TTM notwendig, um die TTM-Daten zu erhalten.

Der Nutzer muss sein BT-Endgerät nur in den Empfangsmodus stellen und hat mit dem Empfang der Advertising Frames alle relevanten TTM Daten automatisch verfügbar.

Die Sendehäufigkeit der BT Advertising Frames ist einstellbar.

Je häufiger die Advertising Frames gesendet werden, desto schneller erhält der Nutzer die gewünschten Daten. Umgekehrt steigt der Energieverbrauch, je häufiger die Advertising Frames gesendet werden.

Die Einstellmöglichkeiten sind: 4s, 8s, 16s, 32s.

Dies ist pro Mode (also MYR, MI, MP, etc.) unterschiedlich einstellbar.

Bei einem Fahrzeug mit 12 TTMs macht es einen Unterschied, ob die Daten alle 4s oder alle 32s gesendet werden.

Das Szenario hierfür ist, dass an dem Fahrzeug TTMs verbaut sind, keine Empfangseinheiten. Der Fahrer geht mit einem BT-fähigen Handy entweder zu Beginn seiner Fahrt oder am Ende seiner Fahrt von Reifen zu Reifen, um die TTM Daten auszulesen. Eine 4s - Sendehäufigkeit macht es sehr komfortabel für den Fahrer, da er nur sehr kurz am Reifen warten muss, bis er die Daten empfangen hat. Bei 32s ist dieser Vorgang für den Fahrer deutlich unkomfortabler.

### Aktivierung / Deaktivierung von BT.

Generell: Für Kunden, die BT nicht nutzen wollen, besteht die Möglichkeit, die BT-Kommunikation (Advertising Frames) gänzlich auszuschalten und so deutlich Energie sparen. Ist der BT-Chip für diesen Betriebsmodus auch zum Prozessieren von internen Daten nicht notwendig, kann mit dieser Einstellung der BT-chip komplett deaktiviert werden, was das größte Energiesparpotential bereithält. Damit können diese Kunden die Batterielebensdauer signifikant erhöhen.

### Für einzelne Modi:

Der Nutzer kann festlegen, in welchem der TTM Modi (MP, MI, MYR) BT-Kommunikation aktiv ist, z.B. nur im MYR. Mögliches Szenario: Der Fahrer prüft nur am Ende der Fahrt den TTM Status mit einem BT-fähigen Handy. Je nach Nutzungsprofil, kann BT für die einzelnen Modi aktiviert oder deaktiviert werden. Auch Cluster sind möglich. Nur die Modi, bei den das TTM im Stillstand ist, etc.

Alle oben genannten Einstellungen sind frei kombinierbar. So kann der Anwender sein persönliches und auf seine Applikation am besten zugeschnittenen Nutzungsprofil im TTM einstellen, um den besten Kompromiss aus TTM-Funktionen und TTM-Lebensdauer zu erwirken.

Die Einstellungen sind über beide Schnittstellen möglich, per HF-Schnittstelle als auch per BT-Schnittstelle, um den Anwendern die freie Wahl anzubieten.

### Bezugszeichenliste

- 1: Basisstation
- 2: Stationäre Empfangseinheit
- 3: Zugmaschine
- 4: NFZ-Anhänger
- 5: Reifenmodul bzw. TTM
- 6: Fahrzeugreifen der Zugmaschine
- 7: Fahrzeugreifen des NFZ-Anhängers
- 8: Ampel
- 9: Parkmodus
- 10: Erster Block-Modus
- 11: Fahrtmodus
- 12: Empfangsmodus für stationäre Emfpangsvorrichtung
- 13: Interim-Modus

## Patentansprüche

1. Verfahren zur Überwachung von Reifeneigenschaften von Fahrzeugreifen (6,7) an einem Fahrzeug (3),
mit mindestens den folgenden Schritten,
a) Bereitstellen von Fahrzeugreifen (6,7) mit einer Vielzahl von Reifenmodulen (5) an einem Fahrzeug,
wobei die Reifenmodule (5) jeweils zumindestens einen Sensor für die Messung von Reifeneigenschaften aufweisen,
b) Starten und Bewegen des Fahrzeuges (3),
wobei die Reifenmodule (5) von einem Stillstand-Modus (9, 13) in einen Bewegungsmodus (10, 11) wechseln,
**dadurch gekennzeichnet, dass**,
c) Anhalten des Fahrzeuges (3),
wobei mindestens ein Sensor im Reifenmodul (5) den Stillstand oder eine langsame Bewegung des Fahrzeugreifens (6,7) detektiert und dann in einen Empfangsmodus (12) für eine stationäre Empfangsvorrichtung (2) wechselt,
wobei in diesem Modus (12) die Sendehäufigkeit der Reifenmodule (5) gegenüber der Sendehäufigkeit im Stillstandmodus (10, 11) oder einem Fahrtmodus (11) erhöht wird,
um die erforderliche Standzeit des Fahrzeuges (3) neben der stationären Empfangsvorrichtung (2) zum Empfangen der Reifeneigenschaften von den Reifenmodulen (3) zu reduzieren,
d) Übergang in einen Interim-Modus (13), wenn eine vorgegeben Zeitdauer überschritten wird oder Übergang in den Bewegungsmodus (10, 11).

2. Verfahren nach Anspruch 1,
**dadurch gekennzeichnet, dass**
die Sendehäufigkeit im Empfangsmodus (12) für eine stationäre Empfangsvorrichtung zwischen 2 und 32 Sekunden, vorzugsweise bei ca. 16 Sekunden liegt.

3. Verfahren nach einem der vorhergehenden Ansprüche,
**dadurch gekennzeichnet, dass**
die Zeitdauer des Empfangsmodus (12) für die stationäre Empfangsvorrichtung manuell über eine Software eingestellt werden kann.

4. Verfahren nach einem der vorhergehenden Ansprüche,
**dadurch gekennzeichnet, dass**
die Zeitdauer des Empfangsmodus (12) für die stationäre Empfangsvorrichtung als Voreinstellung ca. 4 Minuten beträgt.

5. Verfahren nach einem der vorhergehenden Ansprüche,
**dadurch gekennzeichnet, dass**
die Zeitdauer des Empfangsmodus (12) für die stationäre Empfangsvorrichtung manuell auf den Wert von 0 Minuten gesetzt werden kann.

6. Verfahren nach einem der vorhergehenden Ansprüche,
**dadurch gekennzeichnet, dass**
die Zeitdauer des Empfangsmodus (12) für die stationäre Empfangsvorrichtung manuell auf den Wert von ca. 2 Minuten gesetzt werden kann.

7. Verfahren nach einem der vorhergehenden Ansprüche,
**dadurch gekennzeichnet, dass**
die Zeitdauer des Empfangsmodus (12) für die stationäre Empfangsvorrichtung manuell auf den Wert von ca. 8 Minuten gesetzt werden kann.

8. Verfahren nach einem der vorhergehenden Ansprüche,
**dadurch gekennzeichnet, dass**
der Bewegungsmodus aus zwei Modi besteht, einem Ersten Block-Modus (10) mit erhöhter Sendehäufigkeit und einem Fahrt-Modus (11) mit reduzierter Sendehäufigkeit.

9. Verfahren nach einem der vorhergehenden Ansprüche,
**dadurch gekennzeichnet, dass**
der Stillstandmodus aus zwei Modi besteht, einem Parkmodus (9) und einem Interim-Modus (13),
wobei das Reifenmodul (5) aus beiden Modi in den Bewegungsmodus (10, 11) wechselt, wenn das Reifenmodul (5) eine Bewegung des Fahrzeugreifens detektiert
oder wobei das Reifenmodul (5) vom Interim-Modus (13) in den Parkmodus (9) wechselt, wenn in einer vorgegebenen Zeitdauer das Reifenmodul (5) keine Bewegung des Fahrzeugreifens detektiert.

10. Verfahren nach einem der vorhergehenden Ansprüche,
**dadurch gekennzeichnet, dass**
Daten von den Reifenmodulen (5) über eine Hochfrequenz und/oder Bluetooth-Kommunikation übertragen werden.

11. Verfahren nach einem der vorhergehenden Ansprüche,
**dadurch gekennzeichnet, dass**
die Reifenmodule (5) jeweils 2 µ-Controller aufweisen,
wobei der erste µ-Controller für das Senden von Hochfrequenz-Telegrammen und der zweite µ-Controller für die Bluetooth-Kommunikation eingesetzt wird.

12. Verfahren nach einem der vorhergehenden Ansprüche,
**dadurch gekennzeichnet, dass**
die Bluetooth-Kommunikation der Reifenmodule (5) deaktiviert wird, wenn sich die Reifenmodule (5) im Bewegungsmodus befinden.

## Claims

1. Method for monitoring tyre properties of vehicle tyres (6, 7) on a vehicle (3), having at least the following steps of
a) providing vehicle tyres (6, 7) having a multiplicity of tyre modules (5) on a vehicle,
wherein the tyre modules (5) each have at least one sensor for measuring tyre properties,
b) starting and moving the vehicle (3),
wherein the tyre modules (5) change from a standstill mode (9, 13) to a movement mode (10, 11),
**characterized by**
c) stopping the vehicle (3),
wherein at least one sensor in the tyre module (5) detects the standstill or a slow movement of the vehicle tyre (6, 7) and then changes to a receiving mode (12) for a stationary receiving apparatus (2),
wherein, in this mode (12), the frequency of transmission of the tyre modules (5) is increased in comparison with the frequency of transmission in the standstill mode (10, 11) or a travel mode (11)
in order to reduce the required standing time of the vehicle (3) beside the stationary receiving apparatus (2) for the purpose of receiving the tyre properties from the tyre modules (3),
d) transitioning to an interim mode (13) if a predefined period is exceeded or transitioning to the movement mode (10, 11).

2. Method according to Claim 1,
**characterized in that**
the frequency of transmission in the receiving mode (12) for a stationary receiving apparatus is between 2 and 32 seconds, preferably approximately 16 seconds.

3. Method according to one of the preceding claims,
**characterized in that**
the duration of the receiving mode (12) for the stationary receiving apparatus can be manually adjusted using software.

4. Method according to one of the preceding claims,
**characterized in that**
the duration of the receiving mode (12) for the stationary receiving apparatus is approximately 4 minutes as a pre-setting.

5. Method according to one of the preceding claims,
**characterized in that**
the duration of the receiving mode (12) for the stationary receiving apparatus can be manually set to the value of 0 minutes.

6. Method according to one of the preceding claims,
**characterized in that**
the duration of the receiving mode (12) for the stationary receiving apparatus can be manually set to the value of approximately 2 minutes.

7. Method according to one of the preceding claims,
**characterized in that**
the duration of the receiving mode (12) for the stationary receiving apparatus can be manually set to the value of approximately 8 minutes.

8. Method according to one of the preceding claims,
**characterized in that**
the movement mode consists of two modes, a first block mode (10) with increased frequency of transmission and a travel mode (11) with reduced frequency of transmission.

9. Method according to one of the preceding claims,
**characterized in that**
the standstill mode consists of two modes, a parking mode (9) and an interim mode (13),
wherein the tyre module (5) changes from both modes to the movement mode (10, 11) if the tyre module (5) detects a movement of the vehicle tyre,
or wherein the tyre module (5) changes from the interim mode (13) to the parking mode (9) if the tyre module (5) does not detect any movement of the vehicle tyre in a predefined period.

10. Method according to one of the preceding claims,
**characterized in that**
data are transmitted from the tyre modules (5) using a radio frequency and/or Bluetooth communication.

11. Method according to one of the preceding claims,
**characterized in that**
the tyre modules (5) each have 2 µ-controllers,
wherein the first µ-controller is used to transmit radio-frequency messages and the second µ-controller is used for Bluetooth communication.

12. Method according to one of the preceding claims,
**characterized in that**
Bluetooth communication of the tyre modules (5) is deactivated if the tyre modules (5) are in the movement mode.

## Revendications

1. Procédé permettant de surveiller des propriétés de pneu des pneus de véhicule (6, 7) sur un véhicule (3), comprenant au moins les étapes suivantes consistant à
a) fournir des pneus de véhicule (6, 7) munis d'une pluralité de modules de pneu (5) sur un véhicule,
dans lequel les modules de pneu (5) présentent respectivement au moins un capteur pour mesurer des propriétés de pneu,
b) démarrer et déplacer le véhicule (3),
dans lequel les modules de pneu (5) passent d'un mode arrêt (9, 13) à un mode déplacement (10, 11),
**caractérisé par**
c) l'arrêt du véhicule (3),
dans lequel au moins un capteur dans le module de pneu (5) détecte l'arrêt ou un déplacement lent du pneu de véhicule (6, 7) et passe ensuite à un mode réception (12) pour un dispositif de réception stationnaire (2),
dans lequel, dans ce mode (12), la fréquence d'émission des modules de pneu (5) est augmentée par rapport à la fréquence d'émission en mode arrêt (10, 11) ou dans un mode conduite (11),
afin de réduire le temps d'arrêt nécessaire du véhicule (3) près du dispositif de réception stationnaire (2) pour recevoir les propriétés de pneu des modules de pneu (3),
d) le passage à un mode intermédiaire (13) si une durée prédéfinie est dépassée, ou le passage au mode déplacement (10, 11).

2. Procédé selon la revendication 1, **caractérisé en ce que** la fréquence d'émission en mode réception (12) pour un dispositif de réception stationnaire est comprise entre 2 et 32 secondes, de préférence égale à environ 16 secondes.

3. Procédé selon l'une quelconque des revendications précédentes, **caractérisé en ce que** la durée du mode réception (12) pour le dispositif de réception stationnaire peut être réglée manuellement par l'intermédiaire d'un logiciel.

4. Procédé selon l'une quelconque des revendications précédentes, **caractérisé en ce que** la durée du mode réception (12) pour le dispositif de réception stationnaire est d'environ 4 minutes par défaut.

5. Procédé selon l'une quelconque des revendications précédentes, **caractérisé en ce que** la durée du mode réception (12) pour le dispositif de réception stationnaire peut être réglée manuellement sur la valeur de 0 minute.

6. Procédé selon l'une quelconque des revendications précédentes, **caractérisé en ce que** la durée du mode réception (12) pour le dispositif de réception stationnaire peut être réglée manuellement sur la valeur d'environ 2 minutes.

7. Procédé selon l'une quelconque des revendications précédentes, **caractérisé en ce que** la durée du mode réception (12) pour le dispositif de réception stationnaire peut être réglée manuellement sur la valeur d'environ 8 minutes.

8. Procédé selon l'une quelconque des revendications précédentes, **caractérisé en ce que** le mode déplacement est composé de deux modes, d'un premier mode bloc (10) à fréquence d'émission augmentée et d'un mode conduite (11) à fréquence d'émission réduite.

9. Procédé selon l'une quelconque des revendications précédentes, **caractérisé en ce que** le mode arrêt est composé de deux modes, d'un mode stationnement (9) et d'un mode intermédiaire (13),
dans lequel le module de pneu (5) passe des deux modes au mode déplacement (10, 11) si le module de pneu (5) détecte un déplacement du pneu de véhicule,
ou dans lequel le module de pneu (5) passe du mode intermédiaire (13) au mode stationnement (9) si pendant une durée prédéfinie le module de pneu (5) ne détecte aucun mouvement du pneu de véhicule.

10. Procédé selon l'une quelconque des revendications précédentes, **caractérisé en ce que** des données des modules de pneu (5) sont transmises par haute fréquence et/ou par communication Bluetooth.

11. Procédé selon l'une quelconque des revendications précédentes, **caractérisé en ce que** les modules de pneu (5) présentent respectivement 2 microcontrôleurs, dans lequel le premier microcontrôleur est mis en oeuvre pour émettre des télégrammes haute fréquence et le deuxième microcontrôleur est mis en oeuvre pour la communication Bluetooth.

12. Procédé selon l'une quelconque des revendications précédentes, **caractérisé en ce que** la communication Bluetooth des modules de pneu (5) est désactivée si les modules de pneu (5) se trouvent en mode déplacement.
